Europäisches Patentamt

European Patent Office

Office européen des brevets

(11) Veröffentlichungsnummer: **0 031 316**
**B1**

# EUROPÄISCHE PATENTSCHRIFT

(45) Veröffentlichungstag der Patentschrift:
**12.10.83**

(51) Int. Cl.³: **B 44 C 5/04,** B 32 B 27/10,
B 44 C 3/08, B 44 C 1/24

(21) Anmeldenummer: **80890153.2**

(22) Anmeldetag: **19.12.80**

(54) **Dekorative Kunstharz-Schichtpressstoffplatte.**

(30) Priorität: **19.12.79 AT 8002/79**

(43) Veröffentlichungstag der Anmeldung:
**01.07.81 Patentblatt 81/26**

(45) Bekanntmachung des Hinweises auf die Patenterteilung:
**12.10.83 Patentblatt 83/41**

(84) Benannte Vertragsstaaten:
**CH DE FR GB IT LI SE**

(56) Entgegenhaltungen:
**WO-A-80/02655**
**DE-A-1 546 531**
**DE-A-2 357 831**
**DE-A-2 553 906**
**DE-A-2 630 613**
**DE-A-2 650 560**
**DE-B-1 107 933**
**DE-C-800 544**
**US-A-3 732 137**
**US-A-3 802 947**
**US-A-4 064 297**

(73) Patentinhaber: **ISOVOLTA Österreichische
Isolierstoffwerke Aktiengesellschaft, A-2351 Wiener
Neudorf (AT)**

(72) Erfinder: **Pflug, Günther, Dr., Paniglgasse 24,
A-1040 Wien (AT)**
Erfinder: **Petershofer, Georg, Dr., Hauptstrasse 26,
A-2351 Wiener Neudorf (AT)**
Erfinder: **Penicka, Ferdinand, Deinhardsteingasse 11/15,
A-1160 Wien (AT)**

Dekorative Kunstharz-Schichtpressstoffplatte

Die Erfindung betrifft eine dekorative Kunstharz-Schichtpressstoffplatte, die an ihrer dekorativen Seite eine durch im wesentlichen zwei Bereiche unterschiedlich hoher Plattenverdichtung gebildete, reliefartig ausgebildete Oberfläche aufweist und die aus mehreren miteinander heiss verpressten, insbesondere aus mit duroplastischen Bindemitteln imprägnierten Trägerbahnen gebildeten Schichten besteht, welche dekoroberflächenseitig eine oder mehrere oberflächennahe Schichten, von denen zumindest eine Schicht ein duroplastisches Bindemittel und Farbpigmente enthält, sowie — gegen das Platteninnere zu — eine Dekorfolie umfassen, wobei diese oberflächennahe(n) Schicht oder Schichten in der fertigen Platte im Bereich höherer Verdichtung eine wesentlich geringere Dicke und Konzentration der Farbpigmente pro Flächeneinheit aufweist bzw. aufweisen, als im Bereich geringerer Verdichtung und dadurch in diesem Bereich höherer Verdichtung durchsichtig ist bzw. sind.

Kunstharz-Schichtpressstoffplatten dieser Art sind z.B. aus der US-PS 4 092 199 bekannt. Bei diesen bekannten Platten wird die Farbpigmente enthaltende oberflächennahe Schicht durch ein Overlaypapier gebildet, das mit einem Farbpigmente enthaltenden Melaminharz imprägniert ist. Die Plattenherstellung erfolgt dabei wie üblich durch Verpressen der die Schichtpressstoffplatte bildenden Schichten in einer beheizten Presse zwischen zwei Pressplatten, von denen die eine eine reliefartige Oberflächenstruktur mit Erhöhungen und Vertiefungen aufweist, die beim Verpressen die genannten zwei Bereiche unterschiedlich hoher Plattenverdichtung erzeugen, wobei in der genannten Overlaypapierschicht die Farbpigmente zum Grossteil aus dem Bereich höherer Verdichtung in den Bereich geringerer Verdichtung verdrängt werden. Durch die Verdrängung der Farbpigmente wird die Overlaypapierschicht, deren Färbung sich von der Dekorfolie deutlich unterscheidet, in diesem Bereich höherer Verdichtung weitgehend vollständig durchsichtig, so dass dort die Färbung der Dekorfolie durchscheint, während sie im Bereich geringerer Verdichtung je nach der Menge der in ihr enthaltenen Farbpigmente mehr oder weniger undurchsichtig bleibt.

In der Praxis ergeben sich nun aber bei der Durchführung des Verfahrens Schwierigkeiten. Diese bestehen darin, dass beim Verpressen die Farbpigmente nicht nur aus den Bereichen höherer Verdichtung seitwärts innerhalb der Overlaypapierschicht in den Bereich geringerer Verdichtung verdrängt werden, sondern dass sie gleichzeitig auch in weitgehend unkontrollierbarer Weise in die darunterliegende Dekorfolienschicht, die gewöhnlich ein mit einem duroplastischen Bindemittel imprägniertes Dekorpapier ist, eindringen.

Hier will die Erfindung Abhilfe schaffen. Die Erfindung, wie sie in den Ansprüchen gekennzeichnet ist, löst die Aufgabe, eine Kunstharz-Schichtpressstoffplatte der Art, wie in der US-PS 4 092 199 beschrieben, zu schaffen, bei der die Möglichkeit der Erzielung von gut reproduzierbaren dekorativen Effekten erweitert, insbesondere aber auch bei deren Herstellung ein «Absinken» der Farbpigmente in die Dekorfolienschicht sicher und in reproduzierbarer Weise vermieden wird.

Im folgenden wird die Erfindung anhand einer lediglich einen Ausführungsweg darstellenden Zeichnung näher erläutert. Es zeigt:

Fig. 1 in Explosionsdarstellung den Aufbau einer erfindungsgemässen Kunstharz-Schichtpressstoffplatte,

Fig. 2 schematisch im Schnitt die für die Herstellung der reliefartig ausgebildeten Schichtpressstoffplatten-Oberfläche dienende Pressplatten-Matrizeneinheit sowie die Kontur der fertig verpressten Kunstharz-Schichtpressstoffplatte, und

Fig. 3 schematisch im Schnitt in einer Detaildarstellung den Schichtverlauf an der Dekoroberfläche der Schichtpressstoffplatte.

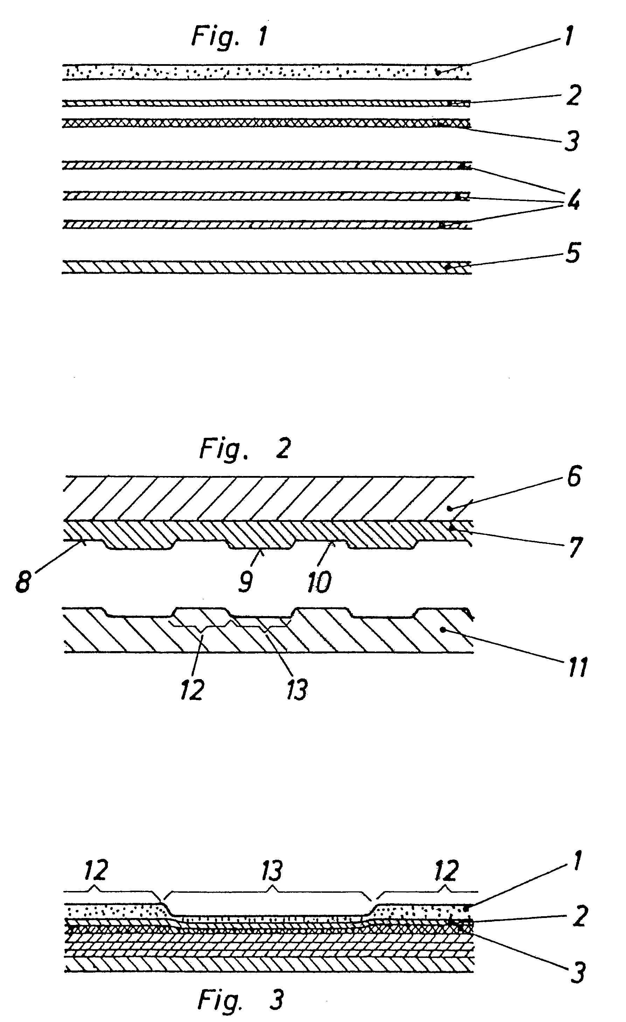

Die bei der Herstellung dieser Schichtpressstoffplatte zu verpressenden Lagen (siehe Fig. 1) bestehen — ausgehend von der dekorativen Oberfläche — aus:

A einem Overlaypapier 1 aus $\alpha$-Cellulose mit einem Flächengewicht von 35 g/m² imprägniert mit einem Gemisch bestehend zu 90 Gew.% (Feststoff) aus einem beim Verpressen gut fliessenden Melaminharz und 10 Gew.% (Feststoff) einer Pigmentpaste (z.B. Coronylrot F 4 RH 30 der Firma Hoechst) mit einer Auftragsmenge von 100 g/m² (Feststoff);

B einem Pergamentersatzpapier 2 (Pergamin) einer gebleichten Qualität mit einem Flächengewicht von 30 g/m²;

C einem mit Harzauftrag von 100 g/m² (Feststoff) mit Melaminharz imprägnierten, unifarbenen Dekorpapier 3 von 100 g/m² Flächengewicht sowie einem volatilen Gehalt von 6 Gew.%;

D mehreren Natronkraftpapierlagen 4 mit einem Flächengewicht von jeweils 180 g/m², imprägniert mit einem Phenolharz-Auftrag von 39 Gew.% (bezogen auf das Rohpapiergewicht) und einem volatilen Gehalt von 7,5 Gew.%, und

E einem Gegenzugblatt 5 aus Natronkraftpapier (180 g/m²) imprägniert mit einem Melaminharz-Auftrag von 61 Gew.% (bezogen auf das Rohpapiergewicht) und mit einem volatilen Gehalt von 8 Gew.%.

Die in Fig. 1 gezeigten, zu einem Stapel gelagerten Lagen werden in einer beheizten Presse verpresst, wobei die der dekorativen Oberfläche des zu erzeugenden Schichtpressstoffes zugewandte Pressplatte 6 (siehe Fig. 2) eine Matrize 7 mit reliefartig ausgebildeter Oberfläche trägt. Das Verpressen erfolgt während einer Presszeit von 5 min, mit einem Pressdruck von 1000 N/cm² bei einer Pressplattentemperatur von 150°C. Die reliefartig ausgebildete Oberfläche 8 der Matrize 7 weist Erhöhungen 9 und Vertiefungen 10 auf, so dass sich an der mit 11 angedeuteten Schichtpressstoffplatte zwei Bereiche unterschiedlicher Verdichtung 12, 13 ergeben. Zumindest einer dieser Bereiche 12, 13 zerfällt dabei in voneinander getrennte Unterbereiche.

Zu der Detaildarstellung von Fig. 3 ist der Schichtverlauf an der Dekoroberfläche der Schichtpressstoffplatte 11 eines von einem Bereich geringerer Verdichtung 12 begrenzten Bereiches höherer Verdichtung 13 zu erkennen.

Die Fliessfähigkeit des im imprägnierten Overlaypapier 1 enthaltenen Harz-Farbpigment-Gemisches ist unter den gegebenen Pressbedingungen wesentlich höher als die der übrigen Schichten des zu erzeugenden Schichtpressstoffes.

Daher wird beim Verpressen das Harz-Farbpigment-Gemisch aus dem Bereich höherer Verdichtung 13 seitwärts in den Bereich geringerer Verdichtung 12 verdrängt. Dadurch wird das imprägnierte Overlaypapier 1 im Bereich 13 durchscheinend, derart, dass dort die Färbung des Dekorpapiers 3 sichtbar wird.

Wegen der zu vernachlässigend geringen Porosität des Pergamentersatzpapiers 2 wird beim Verpressen ein Eindiffundieren der Farbpigmente in das Pergamentersatzpapier 2 bzw. das Dekorpapier 3 sicher vermieden.

In einer vorteilhaften Variante der vorstehend beschriebenen Schichtpressstoffplatte wird ein zusätzlicher dekorativer Effekt dadurch erzielt, dass bei der Plattenherstellung ein Overlaypapier eingesetzt wird, welches an bestimmten Stellen mit einem dekorativen Muster bedruckt ist, wobei diese Stellen an der Schichtpressstoffplatte in dem (z.B. in Unterbereiche zerfallenden) Bereich geringerer Verdichtung 12 zu liegen kommen. Die aufgedruckten Muster sind bei geeigneter Auswahl der Pigmente durch die beim Heissverpressen der Platten an der Overlaypapieroberfläche gebildete dünne Schicht aus Farbpigmente enthaltenden Melaminharz hindurch noch gut sichtbar.

Nach einer anderen vorteilhaften Ausführungsform der erfindungsgemässen Schichtpressstoffplatte wird bei der Plattenherstellung anstelle des Pergamentersatzpapiers (Pergamins) eine durchsichtige Schicht aus einem filmbildenden organischen Material vorgesehen. Der Plattenaufbau unterscheidet sich von dem anhand von Fig. 1 beschriebenen dadurch, dass statt dem Pergamentersatzpapier 2 und dem darunterliegenden Dekorpapier 3 ein melaminharzimprägniertes Dekorpapier, welches dekorseitig einen Polyvinylalkohol-Deckstrich aufweist, eingesetzt wird.

Für die Herstellung dieses mit einem Deckstrich versehenen Dekorpapiers wird z.B. ein weisses Dekorpapier mit einem Flächengewicht von 100 g/m² auf einer Imprägniermaschine mit zwei nacheinander geschalteten Imprägnierabschnitten (jeweils mit Imprägnierwerk und zugehöriger Trockenzone) zunächst im ersten Abschnitt durch Imprägnierung mit einem Melaminharzauftrag von 100-110 g/m² (Feststoff) versehen, wobei die Trocknung so geführt wird, dass der volatile Gehalt (Gewichtsverlust bei einer Trocknung bei 165°C während 5 min) auf 8-10% eingestellt ist.

Im Imprägnierwerk des zweiten Abschnitts wird auf das imprägnierte Dekorpapier dann aus einer 20 gew.%igen Lösung von Polyvinylalkohol 4-88 der Firma Hoechst ein Deckstrich in einer Auftragsmenge von 20 g/m² Feststoff aufgebracht und das Dekorpapier dann in der anschliessenden Trockenzone auf einen volatilen Gehalt von 6% getrocknet.

Statt Polyvinylalkohol können vorteilhaft auch andere filmbildende organische Substanzen, die mit Melaminharz verträglich sind, z.B. Methylcellulose, Stärke, Polyamid usw. eingesetzt werden.

**Patentansprüche**

1. Dekorative Kunstharz-Schichtpressstoffplatte (11), die an ihrer dekorativen Seite eine durch im wesentlichen zwei Bereiche (12, 13) unterschiedlich hoher Plattenverdichtung gebildete reliefartig ausgebildete Oberfläche aufweist und die aus mehreren miteinander heiss verpressten, insbesondere aus mit duroplastischen Bindemitteln imprägnierten Trägerbahnen gebildeten Schichten (1, 3, 4, 5) besteht, welche dekoroberflächenseitig eine oder mehrere oberflächennahe Schichten (1, 3), von denen zumindest eine Schicht (1) ein duroplastisches Bindemittel und Farbpigmente enthält, sowie — gegen das Platteninnere zu — eine Dekorfolie (3) umfassen, wobei diese oberflächennahe(n) Schicht (1) oder Schichten in der fertigen Platte im Bereich (13) höherer Verdichtung eine wesentlich geringere Dicke und Konzentration der Farbpigmente pro Flächeneinheit aufweist bzw. aufweisen, als im Bereich (12) geringerer Verdichtung und dadurch in diesem Bereich (13) höherer Verdichtung durchsichtig ist bzw. sind, dadurch gekennzeichnet, dass zwischen der bzw. den die Farbpigmente enthaltenden oberflächennahen Schicht (1) oder Schichten und der Dekorfolie (3) eine zumindest nahezu porefreie, im verpressten Zustand durchsichtige und aus zumindest überwiegend organischem Material bestehende Schicht (2) angeordnet ist.

2. Kunstharz-Schichtpressstoffplatte nach Anspruch 1, dadurch gekennzeichnet, dass zumindest eine der oberflächennahen Schichten (3) eine Trägerbahn enthält, die zur Erzielung zusätzlicher dekorativer Effekte eingefärbt und/oder bedruckt ist.

3. Kunstharz-Schichtpressstoffplatte nach Anspruch 1 oder 2, dadurch gekennzeichnet, dass die durchsichtige Schicht (2) ein Pergamentersatzpapier (Pergamin) ist.

4. Kunstharz-Schichtpressstoffplatte nach Anspruch 1 oder 2, dadurch gekennzeichnet, dass die durchsichtige Schicht aus einem filmbildenden organischen Material besteht.

5. Kunstharz-Schichtpressstoffplatte nach Anspruch 4, dadurch gekennzeichnet, dass das filmbildende organische Material aus Polyvinylalkohol besteht oder diesen enthält.

## Claims

1. Decorative synthetic resin pressed laminated plate (11), which on its decorative side has a surface constructed in relief, formed through substantially two areas (12, 13) of differing extents of consolidation of the plate, and which consists of several layers (1, 3, 4, 5), hot pressed with one another, formed in particular from carrier layers impregnated with thermosetting binding agents, which on the side of the decorative surface comprise one or more layers (1, 3) close to the surface, of which at least one layer (1) contains a thermosetting binding agent and colouring pigments, and — toward the interior of the plate — a decorative layer (3), whereby this layer (1) or layers close to the surfaces has or have in the finished plate a substantially lesser thickness and concentration of colouring pigments per surface unit in the area (13) of greater consolidation than in the area (12) of lesser consolidation and thereby in this area (13) of greater consolidation is or are transparent, characterized in that between the layer (1) or layers close to the surface and containing the colouring pigments, and the decorative layer (3) a layer (2) is arranged which is at least substantially non-porous, which is transparent in the pressed state and which consists at least predominantly of organic material.

2. Synthetic resin pressed laminated plate according to claim 1, characterized in that at least one of the layers (3) close to the surface comprises a carrier layer which is coloured and/or printed to obtain additional decorative effects.

3. Synthetic resin pressed laminated plate according to claim 1 or 2, characterized in that the transparent layer (2) is an imitation parchment paper (Pergamin).

4. Synthetic resin pressed laminated plate according to claim 1 or 2, characterized in that the transparent layer consists of a film-forming organic material.

5. Synthetic resin pressed laminated plate according to claim 4, characterized in that the film-forming organic material consists of or comprises polyvinyl alcohol.

## Revendications

1. Plaque décorative laminée en résine synthétique moulée sous pression (11) qui comporte sur son côté décoratif une surface en relief formée essentiellement de deux zones (12, 13) de la plaque qui présentent des degrés de compression différents, ladite plaque étant constituée par une pluralité de couches (1, 3, 4, 5) comprimées ensemble à chaud, notamment par des bandes de support imprégnées de liants thermodurcissables, ces couches comprenant du côté de la face décorative une ou plusieurs couches (1, 3) proches de la surface, dont au moins une couche (1) renferme un liant thermodurcissable et des pigments de coloration, ainsi que — vers l'intérieur de la plaque — une feuille décorative (3), ladite (lesdites) couche(s) (1) proche(s) de la surface présentant dans la plaque finie, dans la zone de forte compression (13), une épaisseur sensiblement moindre et une concentration sensiblement moindre en pigments de coloration, par unité de surface, que dans la zone de faible compression (12), de sorte que dans cette zone de forte compression (13) ladite (lesdites) couche(s) proche(s) est (sont) transparente(s), caractérisée en ce qu'entre la (ou les) couche(s) proche(s) de la surface, qui renferment les pigments de coloration, et la feuille décorative (3), est disposée une couche (2) au moins sensiblement non poreuse, transparente après moulage sous pression et formée au moins en proportion majeure d'une matière organique.

2. Plaque décorative laminée en résine synthétique moulée sous pression, selon la revendication 1, caractérisée en ce qu'au moins une des couches (3) proches de la surface comporte une bande de support qui est colorée et/ou imprimée afin de produire des effets décoratifs supplémentaires.

3. Plaque décorative laminée en résine synthétique moulée sous pression, selon la revendication 1 ou 2, caractérisée en ce que la couche transparente (2) est formée de papier en faux parchemin ou substituant de parchemin.

4. Plaque décorative laminée en résine synthétique moulée sous pression, selon la revendication 1 ou 2, caractérisée en ce que la couche transparente est constituée par une matière organique susceptible de former une pellicule.

5. Plaque décorative laminée en résine synthétique moulée sous pression, selon la revendication 4, caractérisée en ce que la matière organique susceptible de former une pellicule est constituée par de l'alcool polyvinylique ou renferme de l'alcool polyvinylique.

Fig. 1

Fig. 2

Fig. 3